# EUROPÄISCHE PATENTSCHRIFT

(11) **EP 1 334 262 B1**
(45) Veröffentlichungstag und Bekanntmachung des Hinweises auf die Patenterteilung: **22.03.2006**
(21) Anmeldenummer: 01978369.5
(22) Anmeldetag: 14.09.2001
(51) Int. Cl.: F01D 17/16, F01D 9/02

(54) **ABGASTURBOLADER FÜR EINE BRENNKRAFTMASCHINE MIT VARIABLER TURBINENGEOMETRIE**
EXHAUST GAS TURBOCHARGER FOR AN INTERNAL COMBUSTION ENGINE WITH VARIABLE TURBINE GEOMETRY
TURBOCOMPRESSEUR POUR MOTEUR A COMBUSTION INTERNE AVEC TURBINE A GEOMETRIE VARIABLE

(30) Priorität: 28.09.2000 DE 10048105
(43) Veröffentlichungstag der Anmeldung: 13.08.2003
(73) Patentinhaber: DaimlerChrysler AG, 70567 Stuttgart (DE); 3K-Warner Turbosystems GmbH, 67292 Kirchheimbolanden (DE)
(72) Erfinder: FLEDERSBACHER, Peter, 70619 Stuttgart (DE); HEMER, Hans-Josef, 67550 Worms (DE); KOCH, Ralf, 67308 Rüssingen (DE); SUMSER, Siegfried, 70184 Stuttgart (DE)
(86) Internationale Anmeldenummer: PCT/EP2001/010615
(87) Internationale Veröffentlichungsnummer: WO 2002/027149

(56) Entgegenhaltungen:
- FR-A- 2 533 627
- US-A- 4 654 941
- US-A- 5 092 126
- US-A- 5 454 225
- US-A- 5 947 681

## Beschreibung

Die Erfindung betrifft einen Abgasturbolader für eine Brennkraftmaschine mit variabler Turbinengeometrie nach dem Oberbegriff des Anspruches 1.

Aus der Druckschrift DE 35 41 508 C1 ist ein Abgasturbolader bekannt, dessen Abgasturbine als Radialturbine ausgebildet ist, die einen radialen Zuströmkanal aufweist, welcher über einen radialen Strömungseintrittsquerschnitt in den das Turbinenrad enthaltenden Turbinenabschnitt mündet. Im Strömungseintrittsquerschnitt ist eine variable Turbinengeometrie angeordnet, welche als Leitgitterring mit verstellbaren Leitschaufeln ausgebildet ist. Die Leitschaufeln sind in Abhängigkeit des aktuellen Betriebszustands der Brennkraftmaschine zwischen einer den freien Strömungseintrittsquerschnitt zum Turbinenrad reduzierenden Staustellung und einer den Strömungseintrittsquerschnitt erweiternden Öffnungsstellung zu verstellen, wodurch der Abgasgegendruck im Leitungsstrang zwischen dem Zylinderauslass und der Abgasturbine manipuliert und auf einen gewünschten Wert eingestellt werden kann. Derartige Abgasturbinen können sowohl in der befeuerten Antriebsbetriebsweise zur Steigerung der Motorleistung als auch im Motorbremsbetrieb zur Erzeugung von Motorbremsleistung eingesetzt werden.

Insbesondere im Motorbremsbetrieb wird das Leitgitter in Staustellung überführt, um zur Erzeugung gewünschter hoher Motorbremsleistungen sowohl auf der Abgasseite als auch auf der Luftseite ein hohes Druckniveau zu erzielen. Um hohe Abgasgegendrücke erzeugen zu können, ist es erforderlich, Fehlluftströme zwischen dem Zuströmkanal der Turbine und der Abströmseite der Turbine zu vermeiden. Derartige unerwünschte Fehlluftströme können durch Spalte erzeugt werden, die sich im Bereich der Einspannung des Radialleitgitters an den Stirnseiten der Leitschaufeln aufgrund thermischer und mechanischer Belastung ausbilden können. Insbesondere bei Nutzfahrzeugmotoren, die eine hohe Motorbremsleistung aufbringen müssen, ist zur Vermeidung von Fehlluftströmen eine passgenaue Lagerung des Leitgitters bei zugleich reduzierter thermischer und mechanischer Belastung anzustreben.

Aus der Druckschrift US-A-5 454 225 ist es bereits bekannt, eine gehäusefeste Stützwand im Zuströmkanal der Abgasturbine vorzusehen, die zwar fest mit dem Turbinengehäuse verbunden ist, jedoch frei in den Zuströmkanal einragt. Diese Stützwand dient zur Abstützung einer variablen Turbinengeometrie im radialen Strömungseintrittsquerschnitt zum Turbinenrad. Die Stützwand ist ringförmig ausgebildet, wobei sich der Querschnitt der Stützwand radial nach außen erweitert. Die variable Turbinengeometrie besitzt die Form eines verstellbaren Leitgitters im radialen Strömungseintrittsquerschnitt. Das Leitgitter ist im Bereich einer seiner Stirnseiten an einer äußeren Gehäusewandung und im Bereich seiner gegenüberliegenden Stirnseite an der einragenden Stützwand gehalten.

Auf Grund der Querschnittserweiterung in Radialrichtung der Stützwand besitzt die Stützwand eine strömungsgünstige Kontur für die Anströmung mit Abgas. Die Lagerung des Leitgitterringes der variablen Turbinengeometrie liegt im Bereich eines schmalen Querschnittabschnittes der Stützwand, unmittelbar benachbart zur radialen Außenseite des Turbinenrades. Die Anbindung der Stützwand an das Turbinengehäuse erfolgt über einen halbaxialen Leitgitterring, über den zusätzlich zum radialen Leitgitterring Abgas dem Turbinenrad zugeführt werden kann. Durch den Leitgitterring erhält die Stützwand eine verhältnismäßig große Steifigkeit, wodurch die Übertragung von Schwingungen aus dem Turbinengehäuse auf die Stützwand und auf die variable Turbinengeometrie unterstützt wird. Derartige Schwingungen können jedoch, sofern sie ein zulässiges Maß überschreiten, zu einer Funktionsbeeinträchtigung der variablen Turbinengeometrie führen.

Der Erfindung liegt das Problem zugrunde, einen gattungsgemäßen Abgasturbolader mit hohem Wirkungsgrad und langer Lebensdauer zu schaffen.

Dieses Problem wird erfindungsgemäß mit den Merkmalen des Anspruches 1 gelöst. Die Unteransprüche enthalten vorteilhafte Weiterbildungen.

Bei dem erfindungsgemäßen Abgasturbolader ist die variable Turbinengeometrie im radialen Strömungseintrittsquerschnitt zum Turbinenrad zwischen zwei gehäusefesten Stützwänden angeordnet, wobei eine der Stützwände in der Weise in den Zuströmkanal einragt, dass die der variablen Turbinengeometrie abgewandte Rückseite der Stützwand einen Abstand zur den Zuströmkanal begrenzenden Innenwand des Turbinengehäuses aufweist. In dieser Ausführung ist die Rückseite dieser Stützwand frei zugänglich und kann von dem Abgas im Zuströmkanal angeströmt werden, so dass nicht nur die Vorderseite der Stützwand im Bereich der variablen Turbinengeometrie als auch die Rückseite der Stützwand mit dem Abgas in Berührung kommt und die Oberfläche der Stützwand im wesentlichen gleichmäßig erwärmt wird, was eine Verringerung thermischer Spannungen in diesem Bauteil zur Folge hat. Die gleichmäßige Erwärmung dieser Stützwand führt dazu, dass diese Stützwand eine thermische Dehnung ausführt, welche etwa der Dehnung der gegenüberliegenden, zweiten Stützwand entspricht, so dass der Relativabstand zwischen den beiden Stützwänden über ein großes Temperaturspektrum im wesentlichen unverändert bleibt und Fehlluftströme zwischen den Stirnseiten des Radialleitgitters und den jeweils begrenzenden Stützwänden vermieden werden.

Ein weiterer Vorteil liegt in der mechanischen Entkopplung der in den Zuströmkanal einragenden Stützwand vom Gehäuse der Turbine. Im Unterschied zum Stand der Technik ist die einragende Stützwand lediglich mit einer Stirnseite mit dem Gehäuse der Turbine verbunden, wodurch die Schwingungsübertragung zwischen Gehäuse und einragender Stützwand im Vergleich zu Ausführungen, bei denen Kontakt zum Gehäuse über die gesamte Oberfläche einer Wandseite besteht, reduziert wird. Außerdem besitzt die einragende Stützwand ein größeres Maß an Nachgiebigkeit, da die Stützwand frei in den Zuströmkanal einragt und nicht großflächig an einem gehäusefesten Bauteil abgestützt ist.

Der Effekt der mechanischen Entkopplung kann durch eine definierte Wandstärkenverteilung und eine dadurch erzeugte Anpassung der Biegesteifigkeit über die Länge der einragenden Stützwand verstärkt werden, was dadurch erreicht wird, dass die Stützwand einen verjüngten Querschnitt aufweist, welcher insbesondere zwischen der stirnseitigen Befestigung der Stützwand am Gehäuse der Turbine und dem Ort der Lagerung der variablen Turbinengeometrie liegt. Der verjüngte Querschnitt ermöglicht ein biegeweiches Nachgeben der einragenden Stützwand zur Kompensation thermischer Dehnungen. Im Bereich der Lagerung der variablen Turbinengeometrie ist dagegen die Stützwand vorteilhaft dicker ausgebildet, damit die Turbinengeometrie sicher befestigt werden kann.

Gemäß einer weiteren vorteilhaften Ausführung ist die Stützwand als eigenständiges, vom Gehäuse des Abgasturbolader separates Bauteil ausgeführt, wodurch die Möglichkeit eröffnet wird, die Stützwand aus einem anderen Material als die den Zuströmkanal begrenzenden Gehäusewände auszuführen und der Stützwand dementsprechend sich unterscheidende mechanische und/oder thermische Eigenschaften zuzuordnen. Die Ausführung als eigenständiges Bauteil reduziert insbesondere die Schwingungsübertragung zwischen der Stützwand und den übrigen Gehäusewandungen.

Es kann vorteilhaft sein, die Stützwand mit einem Hitzeschild zu verbinden, welcher einen Teil der Innenwand des Zuströmkanals bildet und wärmesensitive Bauteile des Abgasturboladers von dem Zuströmkanal abschirmt.

Die einragende Stützwand erstreckt sich zweckmäßig an einer Stirnseite des Turbinenrades zumindest über den radial außen liegenden Bereich des Turbinenrades und begrenzt dadurch den vorteilhaft spiralförmigen Zuströmkanal von dem Abströmbereich, in welchem das Turbinenrad drehbar aufgenommen ist. Diese Ausführung zeichnet sich durch eine kompakte Bauform aus.

Weitere Vorteile und zweckmäßige Ausführungen sind den weiteren Ansprüchen, der Figurenbeschreibung und den Zeichnungen zu entnehmen. Es zeigen:
- Fig. 1a: einen Schnitt durch einen Abgasturbolader für eine Brennkraftmaschine, dessen Abgasturbine als Radialturbine ausgebildet ist und im radialen Zuströmbereich zum Turbinenrad mit variabler Turbinengeometrie ausgestattet ist,
- Fig. 1b: eine vergrößerte Darstellung aus dem radialen Zuströmbereich der Turbine mit einem verstellbaren Element der variablen Turbinengeometrie,
- Fig. 1c: eine Draufsicht auf die variable Turbinengeometrie, ausgeführt als Radialleitgitter mit beweglichen Leitschaufeln,
- Fig. 2: einen Schnitt durch eine Abgasturbine in einer modifizierten Ausführung,
- Fig. 3: einen Schnitt durch eine Abgasturbine in noch einer modifizierten Ausführung.

In den folgenden Figuren sind gleiche Bauteile mit gleichen Bezugszeichen versehen.

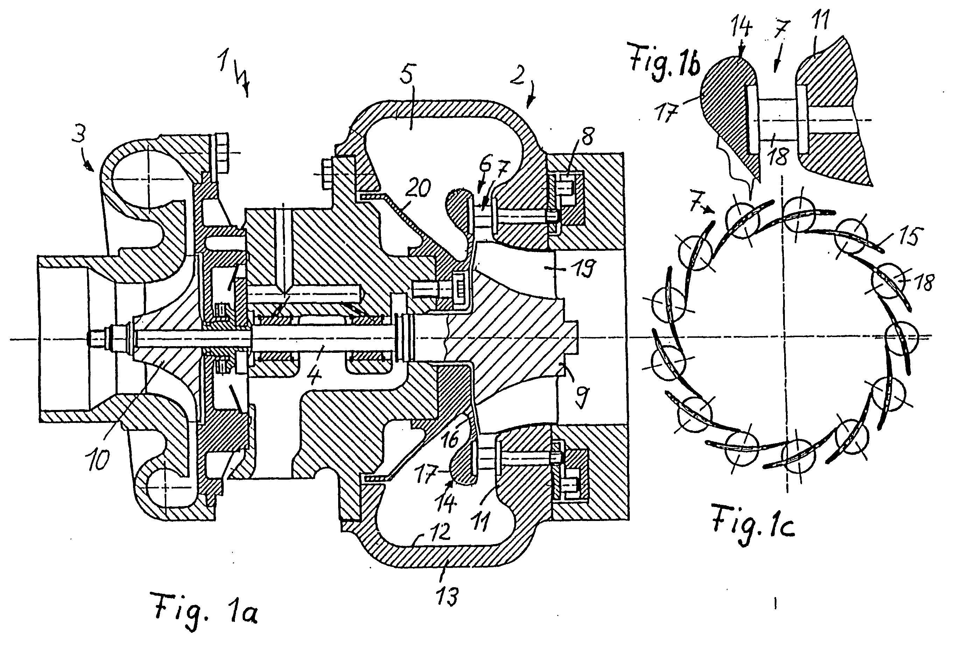

Der in Fig. 1a dargestellt Abgasturbolader 1 für eine Brennkraftmaschine umfasst eine Abgasturbine, welche als Radialturbine 2 ausgeführt ist, und einen Verdichter 3. Ein Turbinenrad 9 der Radialturbine 2 ist über eine Welle 4 drehfest mit einem Verdichterrad 10 des Verdichters 3 verbunden. Im Betrieb der Brennkraftmaschine wird Abgas des Motors in einen radialen Zuströmkanal der Radialturbine geleitet und über einen radialen Strömungseintrittsquerschnitt dem Turbinenrad 9 zugeführt, dessen Drehbewegung über die Welle 4 auf das Verdichterrad 10 übertragen wird, woraufhin im Verdichter 3 angesaugte Verbrennungsluft auf einen erhöhten Ladedruck verdichtet und dem Zylindereinlass des Motors zugeführt wird.

Im radialen Strömungseintrittsquerschnitt 6 zwischen spiralförmigem Zuströmkanal 5 der Radialturbine 2 und dem Turbinenrad 9 ist eine variable Turbinengeometrie 7 angeordnet, die über eine Stelleinrichtung 8 zwischen einer den radialen Strömungseintrittsquerschnitt 6 reduzierenden Staustellung und einer erweiternden Öffnungsstellung zu verstellen ist. Die Einstellung der Position der variablen Turbinengeometrie erfolgt in Abhängigkeit von aktuellen Motor-, Betriebs- und Kenngrößen zur gezielten Manipulation des Abgasgegendrucks zwischen Zylinderauslass und Radialturbine 2 sowie des Ladedrucks, welcher dem Motor zuzuführen ist. Die variable Turbinengeometrie 7 wird vorteilhaft sowohl in der befeuerten Antriebsweise als auch im Motorbremsbetrieb zur gewünschten Einstellung des Abgasgegendrucks und des Ladedrucks eingesetzt.

Wie Fig. 1a in Verbindung mit den Figuren 1b und 1c zu entnehmen, ist die variable Turbinengeometrie 7 im radialen Strömungseintrittsquerschnitt 6 als Leitgitter mit einer Mehrzahl ringförmig verteilter und drehbar gelagerter Leitschaufeln 15 ausgebildet und im Gehäuse 13 der Radialturbine 2 zwischen zwei gehäusefesten Stützwänden 11 und 14 angeordnet. Die erste Stützwand 11 ist Bestandteil der Innenwand 12 des spiralförmigen Zuströmkanals 5 im Gehäuse 13 der Radialturbine 2.

Die zweite Stützwand 14 ist gegenüber der außen liegenden, ersten Stützwand 11 radial nach innen in den Innenraum des Zuströmkanals 5 versetzt angeordnet und ragt in den Innenraum ein. Diese einragende Stützwand 14 weist einen dünnwandigen Verbindungsabschnitt 16, über den die Stützwand 14 gehäusefest angebunden ist, sowie einen dickwandigen, radial außen liegenden Endabschnitt 17 auf, in welchem Leitschaufelträger 18 aufgenommen sind, an denen die Leitschaufeln 15 der variablen Turbinengeometrie gelagert sind. Der dünnwandige Verbindungsabschnitt 16 verringert die Biegesteifigkeit der einragenden Stützwand 14 und ermöglicht ein elastisches Nachgeben der Stützwand 14 in Richtung der Längsachse des Leitschaufelträgers 18, wodurch eine zumindest teilweise mechanische Entkopplung der Stützwand 14 von den weiteren Gehäuseteilen der Radialturbine und auch eine teilweise thermische Entkopplung gegeben ist.

Der sich etwa radial zur Turbinenachse erstreckende dünnwandige Verbindungsabschnitt 16 der einragenden Stützwand 14 trennt den Zuströmkanal 5 von der Rückseite des Turbinenrads 9, insbesondere vom rückseitigen Stirnwandbereich der Turbinenradschaufeln 19 des Turbinenrades 9. Der dünnwandige Verbindungsabschnitt 16 liegt in einer halbaxialen Ausnehmung zwischen Zuströmkanal 5 und Turbinenrad 9. Der Verbindungsabschnitt 16 kann sowohl geschlossen ausgeführt sein, um eine halbaxiale Zuströmung von Abgas zum Turbinenrad 9 zu unterbinden, als auch Durchströmöffnungen aufweisen, um eine gezielte Zuströmung zum Turbinenrad 9 zu ermöglichen. In letzterem Fall kann in dem halbaxialen Strömungseintrittsquerschnitt ein Leitgitter zur Beeinflussung der Strömung vorgesehen sein.

Da die Stützwand 14 radial in den Zuströmkanal 5 einragt, ist eine Anströmung mit Abgas auf beiden Seiten der Stützwand 14 gegeben, wodurch thermische Spannungen in der Stützwand vermieden werden und eine gleichmäßige temperaturbedingte Dehnung Der Stützwand 14 gegeben ist.

Die einragende Stützwand 14 bildet im Ausführungsbeispiel gemäß Fig. 1a mit einem Hitzeschild 20, welcher die radial innen liegende Seite des Zuströmkanals 5 begrenzt und thermisch sensitive Bauteile des Abgasturboladers 1 gegenüber den heißen Abgasen im Zuströmkanal 5 thermisch isoliert, ein einteiliges Bauteil. Stützwand 14 und Hitzeschild 20 sind bevorzugt einstückig ausgeführt und bestehen aus gleichem Material. Dieses Bauteil ist als etwa ringförmiges Bauteil ausgeführt und mit dem Abgasturbolader 1 verbunden.

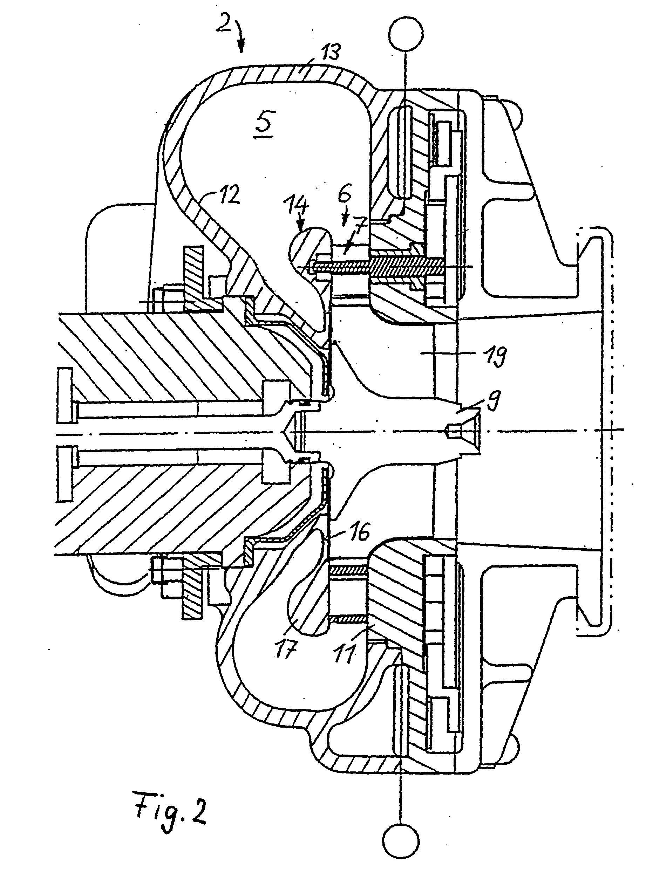

Im Ausführungsbeispiel gemäß Fig. 2 ist die in den Zuströmkanal 5 einragende Stützwand 14 einstückig mit der Wandung des Gehäuses 13 ausgeführt; die Stützwand geht unterbrechungslos in die Innenwand 12 des Zuströmkanals 5 über. Der dünnwandige Verbindungsabschnitt 16 der Stützwand 14 erstreckt sich im Ausführungsbeispiel radial etwa über die radiale Höhe der Turbinenradschaufel 19. Der Zuströmkanal 5 ist in Richtung auf das Turbinenrad 9 mit einer etwa halbaxialen Ausnehmung versehen.

Gegebenenfalls kann es aber auch zweckmäßig sein, den dünnwandigen Verbindungsabschnitt 16 mit einer geringeren radialen Erstreckung auszuführen und insbesondere in einen radial weiter außen liegenden Bereich zu verlegen, wodurch die halbaxiale Ausnehmung des Zuströmkanals 5 eine weniger starke Ausprägung einnimmt.

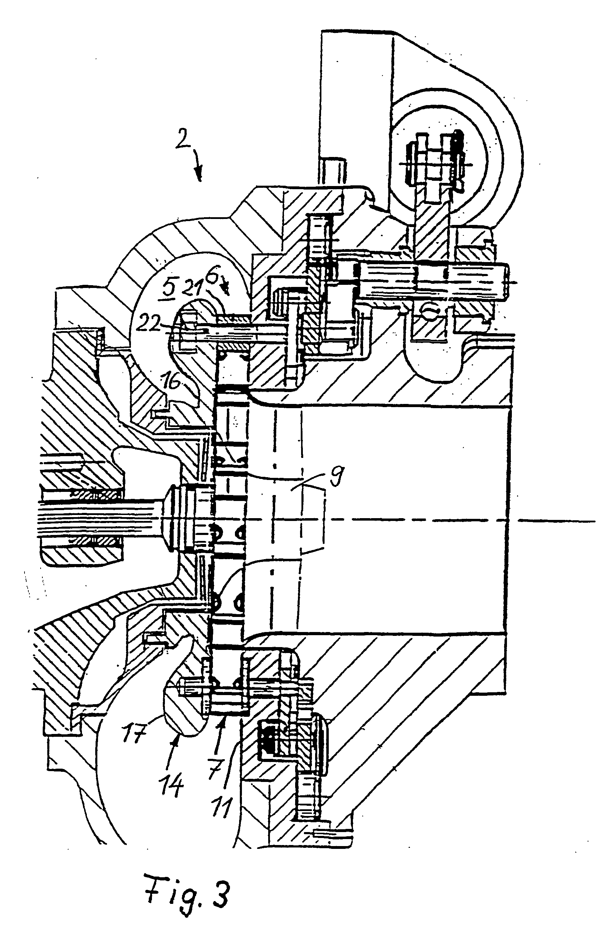

Im Ausführungsbeispiel gemäß Fig. 3 sind im radialen Strömungseintrittsquerschnitt 6 zwischen Zuströmkanal 5 und Turbinenrad 9 Distanzbuchsen 21 vorgesehen, um einen definierten Mindestabstand zwischen äußerer Stützwand 11 und radial in den Zuströmkanal 5 einragender Stützwand 14 zu gewährleisten und eine reibungsfreie Verstellung der Leitschaufeln der variablen Turbinengeometrie 7 sicherzustellen. Die variable Turbinengeometrie im Strömungseintrittsquerschnitt 6 ist über Schrauben 22 fixiert, die zwischen dem Endabschnitt 17 der Stützwand 14 und der Stützwand 11 verlaufen.

## Patentansprüche

1. Abgasturbolader für eine Brennkraftmaschine, mit einer Abgasturbine und einem Verdichter (3), der über eine Welle (4) mit der Abgasturbine verbunden ist, wobei die Abgasturbine als Radialturbine (2) mit radialem Zuströmkanal (5) und einem radialen Strömungseintrittsquerschnitt (6) zum Turbinenrad (9) ausgebildet ist und eine variable Turbinengeometrie (7) zur veränderlichen Querschnittseinstellung des radialen Strömungseintrittsquerschnitts (6) aufweist, die zwischen zwei gehäusefesten Stützwänden (11, 14) abgestützt ist, wobei eine Stützwand (14) in den Zuströmkanal (5) einragt, derart, dass die der variablen Turbinengeometrie (7) abgewandte Rückseite dieser Stützwand (14) auf Abstand zur Innenwand (12) des Zuströmkanals (5) liegt und diese Rückseite von dem im Zuströmkanal (5) befindlichen Abgas anströmbar ist, und wobei die Stützwand (14) einen dickwandigen, radial außen liegenden Endabschnitt (17) für die Lagerung der variablen Turbinengeometrie und einen dünnwandigen Verbindungsabschnitt (16) mit verjüngtem Querschnitt aufweist, über den die Stützwand (14) fest mit dem Gehäuse (13) der Abgasturbine verbunden ist
**dadurch gekennzeichnet,**
**dass** der dünnwandige Verbindungsabschnitt (16) ein elastisches Nachgeben der Stützwand (14) in Richtung der Längsachse des Leitschaufelträgers (18) ermöglicht.

2. Abgasturbolader nach Anspruch 1,
**dadurch gekennzeichnet,**
**dass** die Stützwand (14) als eigenständiges, vom Gehäuse (13) des Abgasturbolader (1) getrenntes Bauteil ausgeführt ist.

3. Abgasturbolader nach Anspruch 1 oder 2,
**dadurch gekennzeichnet,**
**dass** das die Stützwand (14) mit einem Hitzeschild (20) an der Innenwand (12) des Zuströmkanals (5) ein gemeinsames Bauteil bildet.

4. Abgasturbolader nach einem der Ansprüche 1 bis 3,
**dadurch gekennzeichnet,**
**dass**, die Stützwand (14) an einer Stirnseite des Turbinenrades (9) angeordnet ist und sich zumindest über den radial außenliegenden Bereich des Turbinenrades (9) erstreckt.

5. Abgasturbolader nach einem der Ansprüche 1 bis 4,
**dadurch gekennzeichnet,**
**dass**, die variable Turbinengeometrie (7) als Leitgitter mit beweglichen Leitschaufeln (15) zwischen den Stützwänden (11, 14) ausgeführt ist.

6. Abgasturbolader nach einem der Ansprüche 1 bis 5,
**dadurch gekennzeichnet,**
**dass**, im Zwischenraum zwischen den Stützwänden (11, 14) Distanzbuchsen (21) vorgesehen sind.

7. Abgasturbolader nach einem der Ansprüche 1 bis 6,
**dadurch gekennzeichnet,**
**dass**, die in den Zuströmkanal (5) einragende Stützwand (14) in Längsrichtung des Laders (1) gesehen zwischen dem Turbinenrad (9) und dem Verdichter (3) angeordnet ist.

## Claims

1. A turbocharger for an internal combustion engine having an exhaust gas turbine and a compressor (3) which is connected to the exhaust gas turbine by a shaft (4), the exhaust gas turbine being designed as a radial turbine (2) with a radial inflow channel (5) and a radial flow inlet cross-section (6) to the turbine wheel (9) and having a variable turbine geometry (7) for the variable cross-section adjustment of the radial flow inlet cross-section (6) which is supported between two supporting walls (11, 14) which are fixed to the housing, one supporting wall (14) projecting into the inflow channel (5) in such a manner that the rear face of this supporting wall (14) which faces away from the variable turbine geometry (7) lies a certain distance from the inner wall (12) of the inflow channel (5) and the exhaust gas located in the inflow channel (5) is able to flow against this rear face, and the supporting wall (14) having a thick-walled, radially outer end section (17) for mounting the variable turbine geometry and a thin-walled connecting section (16) with a tapering cross-section by means of which the supporting wall (14) is fixed to the housing (13) of the exhaust gas turbine,
**characterised in that**
the thin-walled connecting section (16) allows the supporting wall (14) to yield elastically along the length of the guide vane support (18).

2. A turbocharger in accordance with claim 1,
**characterised in that**
the supporting wall (14) is designed as an independent component separate from the housing (13) of the turbocharger (1).

3. A turbocharger in accordance with claim 1 or 2,
**characterised in that**
the supporting wall (14) and a heat shield (20) on the inner wall (12) of the inflow channel (5) form one single component.

4. A turbocharger in accordance with one of claims 1 to 3,
**characterised in that**
the supporting wall (14) is positioned on a front face of the turbine wheel (9) and extends at least over the radially outer area of the turbine wheel (9).

5. A turbocharger in accordance with one of claims 1 to 4,
**characterised in that**
the variable turbine geometry (7) is designed as a guide row with movable guide vanes (15) between the supporting walls (11, 14).

6. A turbocharger in accordance with one of claims 1 to 5,
**characterised in that**
spacer sleeves (21) are positioned in the space between the supporting walls (11, 14).

7. A turbocharger in accordance with one of claims 1 to 6,
**characterised in that**
when viewed along the length of the turbocharger (1), the supporting wall (14) which projects into the inflow channel (5) is positioned between the turbine wheel (9) and the compressor (3).

## Revendications

1. Turbocompresseur à gaz d'échappement pour un moteur à combustion interne, avec une turbine à gaz d'échappement et un compresseur (3), qui par l'intermédiaire d'un arbre (4) est relié à la turbine à gaz d'échappement, la turbine à gaz d'échappement étant conçue sous la forme d'une turbine radiale (2) avec une canalisation d'alimentation radiale (5) et avec une section transversale d'entrée d'écoulement radiale (6) vers la roue de la turbine (9) et qui présente une géométrie de turbine variable (7) pour la modification du réglage de la section transversale d'entrée d'écoulement radiale (6), qui s'appuie entre deux parois de soutien (11, 14) fixes sur le boîtier, une paroi de soutien (14) saillant dans la canalisation d'alimentation (5), de façon à ce que la face arrière de cette paroi de soutien (14) qui est opposée à la géométrie variable de la turbine (7) se situe à distance de la paroi inférieure (12) de la canalisation d'alimentation (5) et à ce que cette face arrière puisse être soumise aux gaz d'échappement qui se trouvent dans la canalisation d'alimentation (5), et la paroi de soutien (14) présentant une section d'extrémité (17) à paroi épaisse située vers l'extérieur en direction radiale, pour le logement de la géométrie de turbine variable et une section de liaison (16) à paroi mince, à section transversale rétrécie, par l'intermédiaire de laquelle la paroi de soutien (14) est fixement reliée au boîtier (13) de la turbine à gaz d'échappement, **caractérisé en ce que**
la section de liaison à paroi mince (16) permet un relâchement élastique de la paroi de soutien (14) en direction de l'axe longitudinal du support d'aubes directrices (18).

2. Turbocompresseur à gaz d'échappement selon la revendication 1,
**caractérisé en ce que** la paroi de soutien (14) est conçue sous la forme d'un élément autonome, séparé du boîtier (13) du turbocompresseur à gaz d'échappement (1).

3. Turbocompresseur à gaz d'échappement selon la revendication 1 ou 2,
**caractérisé en ce que** la paroi du soutien (14) forme un élément commun avec un bouclier thermique (20) sur la paroi inférieure (12) de la canalisation d'alimentation (5).

4. Turbocompresseur à gaz d'échappement selon l'une quelconque des revendications 1 à 3,
**caractérisé en ce que** la paroi de soutien (14) est disposée sur une face frontale de la roue de turbine (9) et s'étend au moins sur la zone radiale extérieure de la roue de turbine (9).

5. Turbocompresseur à gaz d'échappement selon l'une quelconque des revendications 1 à 4,
**caractérisé en ce que** la géométrie de turbine variable (7) est réalisée sous la forme d'une grille directrice à aubes directrices mobiles (15), entre les parois de soutien (11, 14) .

6. Turbocompresseur à gaz d'échappement selon l'une quelconque des revendications 1 à 5,
**caractérisé en ce que** des douilles d'écartement (21) sont prévues dans l'espace intermédiaire entre les parois de soutien (11, 14).

7. Turbocompresseur à gaz d'échappement selon l'une quelconque des revendications 1 à 6,
**caractérisé en ce que** la paroi de soutien (14) saillant dans la canalisation d'alimentation (5) est disposée entre la roue de turbine (9) et le compresseur (3), vue dans le sens longitudinal du turbocompresseur (1).
